Europäisches Patentamt

European Patent Office

Office européen des brevets

(19)

(11) Veröffentlichungsnummer: **0 183 891**

**A1**

(12) # EUROPÄISCHE PATENTANMELDUNG

(21) Anmeldenummer: **84890220.1**

(22) Anmeldetag: **16.11.84**

(51) Int. Cl.⁴: **B 01 D 53/34**
**F 23 J 15/00**

(43) Veröffentlichungstag der Anmeldung:
**11.06.86 Patentblatt 86/24**

(84) Benannte Vertragsstaaten:
**BE CH DE FR GB IT LI NL SE**

(71) Anmelder: **SIMMERING-GRAZ-PAUKER**
**AKTIENGESELLSCHAFT**
**Mariahilferstrasse 32**
**A-1071 Wien VII(AT)**

(72) Erfinder: **Gruber, Otto**
**Markomannenstrasse 15/6/32**
**A-1220 Wien(AT)**

(72) Erfinder: **Budin, Kurt**
**Hauffgasse 21**
**A-1110 Wien(AT)**

(74) Vertreter: **Köhler-Pavlik, Johann, Dipl.-Ing.**
**Margaretenplatz 5**
**A-1050 Wien(AT)**

(54) **Vorrichtung zur Wiederaufheizung von Rauchgasen.**

(57) Eine Vorrichtung zur Wiederaufheizung von Rauchgasen, die aus einer, einem Kesselsystem nachgeschalteten Rauchgasnachbehandlungsanlage (7) austreten, mittels eines ersten Wärmetauschers (14), der nach der Rauchgasnachbehandlungsanlage (7) angeordnet ist, beheizt ist. Der Primärkreislauf des ersten Wärmetauschers (14) ist an den Sekundärkreislauf eines zweiten Wärmetauschers (12a, 12b, 12c, 12d) angeschlossen, der entweder beim Austritt der Rauchgase aus dem Luftvorwärmer (4) des Kesselsystems, oder beim Eintritt der Rauchgase in den Luftworwärmer (4), oder zwischen dem Eintritt der Rauchgase in den Luftvorwärmer und dem Austritt der Heißluft aus dem Luftvorwärmer, oder aber beim Austritt der Heißluft aus dem Luftvorwärmer angeordnet ist.

Fig 3

_1_

## Vorrichtung zur Wiederaufheizung von Rauchgasen

Die Erfindung betrifft eine Vorrichtung zur Wiederaufheizung von Rauchgasen, die aus einer, einem Kesselsystem nachgeschalteten Rauchgasbehandlungsanlage austreten, mittels eines ersten Wärmetauschers, der nach der Rauchgasnachbehandlungsanlage angeordnet und durch Wärme der heißen Rauchgase und/oder der dem Kesselsystem zugeführten Heißluft und/oder gegebenenfalls zusätzlicher Fremdwärme beheizt ist.

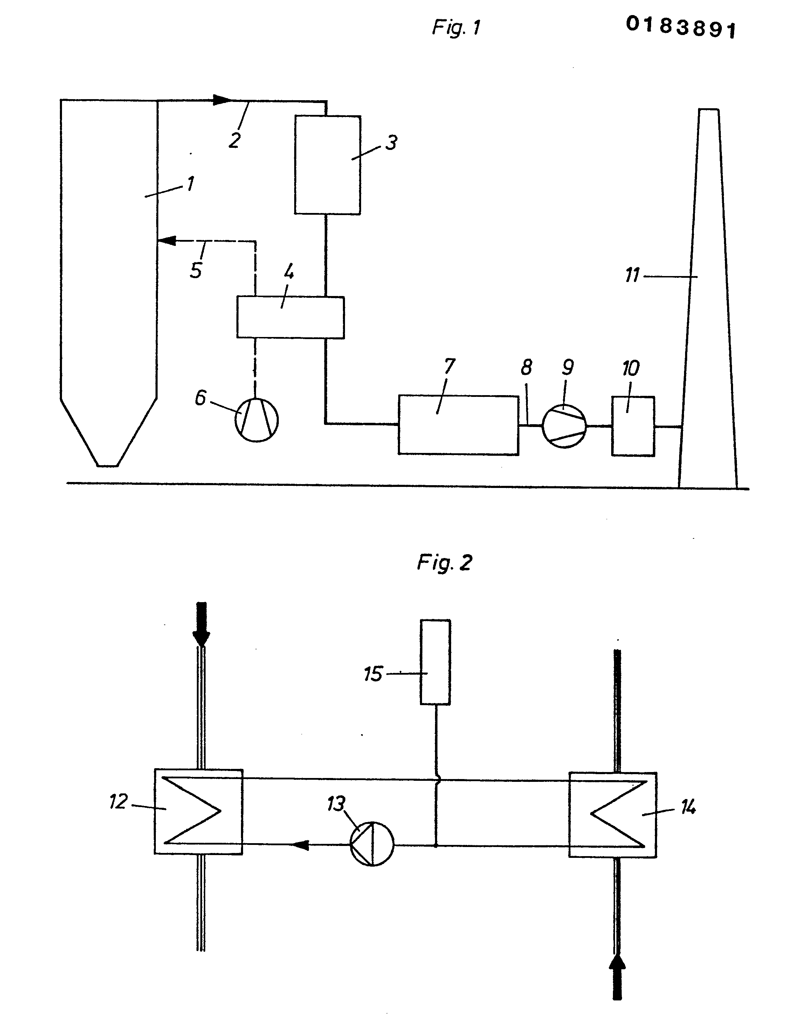

Die Wiederaufheizung der Rauchgase nach einer Rauchgasnachbehandlungsanlage, z.B. einer Rauchgasentschwefelungsanlage, erfolgt üblicherweise durch den Einsatz von Turbinenanzapfdampf oder von Gas- oder Ölbrennern (Fig. 1), oder durch den Einsatz von Dreh-Gasvorwärmern, die nach dem Luftvorwärmer des Kesselsystems angeordnet sind.

Durch die Verwendung des Turbinenanzapfdampfes wird der Wirkungsgrad des Kraftwerkblocks vermindert. Der Einsatz von Gas- bzw. Ölbrennern bedingt zusätzliche Kosten. Bei Ölbrennern kommt es zu einer erhöhten $SO_2$-Konzentration der Reingase bei der Verbrennung schwefelhältiger Öle. Beim Einsatz von Dreh-Gasvorwärmern kommt es zum Übertritt von Rohgas in das Reingas. Außerdem ist die Ausführung der Rauchgasleitungen und der Heizflächen (Taupunkt) sehr kostenaufwendig.

Durch die DE-OS 27 03 681 ist der Einsatz eines Wärmetauschers bekannt, der direkt durch die aus dem Kessel austretenden Rauchgase beheizt wird, wobei die Rauchgase anschließend in die Rauchgasnachbehandlungsanlage eintreten und nach dem Passieren eines Trockners im Wärmetauscher wieder aufgeheizt und über ein Gebläse zum Schornstein geleitet werden. Die direkte Wärmeübertragung von heißem Rauchgas auf kaltes Rauchgas erfordert eine großflächige Ausführung des Wärmetauschers und die Austrittstemperatur ist in starkem Maß von der schwankenden Eintrittstemperatur abhängig. Außerdem ist dadurch keine Regelungsmöglichkeit der Austrittstemperatur gegeben.

Aufgabe der Erfindung ist die Schaffung einer Vorrichtung zur Wiederaufheizung von Rauchgasen, ohne daß eine externe Energiezufuhr notwendig ist, oder daß zusätzlich nur eine minimale externe Energiezufuhr erfolgt, wobei auch eine Regelung der Austrittstemperatur der Rauchgase aus dem ersten Wärmetauscher gegeben sein soll.

Die Vorrichtung der eingangs genannten Art ist erfindungsgemäß dadurch gekennzeichnet, daß der Primärkreislauf des ersten Wärmetauschers wahlweise an den Sekundärkreislauf eines zweiten Wärmetauschers angeschlossen ist, welcher beim Austritt der Rauchgase aus dem Luftvorwärmer des Kesselsystems angeordnet ist, oder an den Sekundärkreislauf eines dritten Wärmetauschers angeschlossen ist, welcher beim Eintritt der Rauchgase in den Luftvorwärmer des Kesselsystems angeordnet ist, oder an den Sekundärkreislauf eines vierten Wärmetauschers angeschlossen ist, welcher zwischen dem Eintritt der Rauchgase in den Luftvorwärmer des Kesselsystems und dem Austritt der Heißluft aus dem Luftvorwärmer angeordnet ist, wobei ein Gebläse und ein Staubabscheider in Serie liegend im Primärkreislauf des vierten Wärmetauschers angeordnet sind,oder an den Sekundärkreislauf eines fünften Wärmetauschers angeschlossen ist, welcher beim Austritt der Heißluft aus dem Luftvorwärmer des Kesselsystems angeordnet ist.

In Ausgestaltung der Erfindung ist vorgesehen, daß für die Wiederaufheizung die zweiten bis fünften Wärmetauscher in Kombination untereinander zu zweit, zu dritt oder zu viert in Serien- und/oder Parallelschaltung angeordnet sind.

Des weiteren ist erfindungsgemäß vorgesehen, daß in an sich bekannter Weise eine Pumpe für das Wärmeträgermedium im Primärkreislauf des ersten Wärmetauschers angeordnet ist, wobei die Drehzahl des Antriebsmotors für die Pumpe regelbar ist, um die Austrittstemperatur der wiedererhitzten Reingase aus dem ersten Wärmetauscher konstant zu halten.

Weitere Einzelheiten der Erfindung werden nachfolgend anhand von Ausführungsbeispielen beschrieben, wobei gleiche Anlagenteile mit gleichen Bezugszeichen versehen sind.

Es zeigen

Figur 1 ein Blockschema einer herkömmlichen Kraftwerksanlage,

Figur 2 die grundsätzliche Anordnung der Wärmetauscher gemäß der Erfindung,

und Figur 3 bis 6 vier Ausführungsbeispiele gemäß der Erfindung.

In Fig. 1 bezeichnet 1 einen Kessel, aus dem die heißen Rauchgase 2 austreten und in eine DeNOx-Anlage 3 eintreten. Die DeNOx-Anlage 3 ist als katalytisch wirkende Anlage zur Verminderung des Gehaltes an Stickoxiden ($NO_x$) ausgebildet und wird auch als SCR-Anlage (selective catalytic reduction) bezeichnet. Nach der DeNOx-Anlage 3 gelangen die Rauchgase 2 zu einem Luftvorwärmer 4, in welchem ein Teil der Wärme der Rauchgase 2 an die Verbrennungsluft 5 abgegeben wird. Vor dem Luftvorwärmer 4 ist ein Frischluftgebläse 6 angeordnet. Nach dem Luftvorwärmer 4 gelangen die
Rauchgase 2 zu einer Rauchgasnachbehandlungsanlage, die beispielsweise als Rauchgasentschwefelungsanlage 7 ausgeführt ist. Die
abgekühlten Reingase 8 werden anschließend über ein Saugzuggebläse 9 zu einer Wiederaufheizungsanlage 10 geleitet und treten
anschließend über einen Schornstein 11 in die Atmosphäre. Die
Nachteile der Kraftwerksanlage nach Fig. 1 wurden bereits einleitend erwähnt.

Fig. 2 zeigt die grundsätzliche Anordnung von zwei Wärmetauschern
12,14 zur Wiederaufheizung der abgekühlten Reingase nach einer
Rauchgasnachbehandlungsanlage. Der Wärmetauscher 12 wird primärseitig vom heißen Rauchgas bzw. von der Heißluft beheizt. Der
Sekundärkreislauf des Wärmetauschers 12 ist über eine Umwälzpumpe 13 mit dem Primärkreislauf des Wärmetauschers 14 verbunden,
durch dessen Sekundärkreislauf die aus der Rauchgasentschwefelungsanlage austretenden Reingase strömen und dabei auf die erforderliche Temperatur erhitzt werden. Als Wärmeträgermedium dient
Trägeröl oder eine Wasser-Glykolmischung. Zum Druckausgleich
bzw. zum Aufrechterhalten einer genügenden Menge an Wärmeträgermedium ist ein Ausdehnungsgefäß 15 vorgesehen, dessen Innendruck
gegebenenfalls regelbar ist.

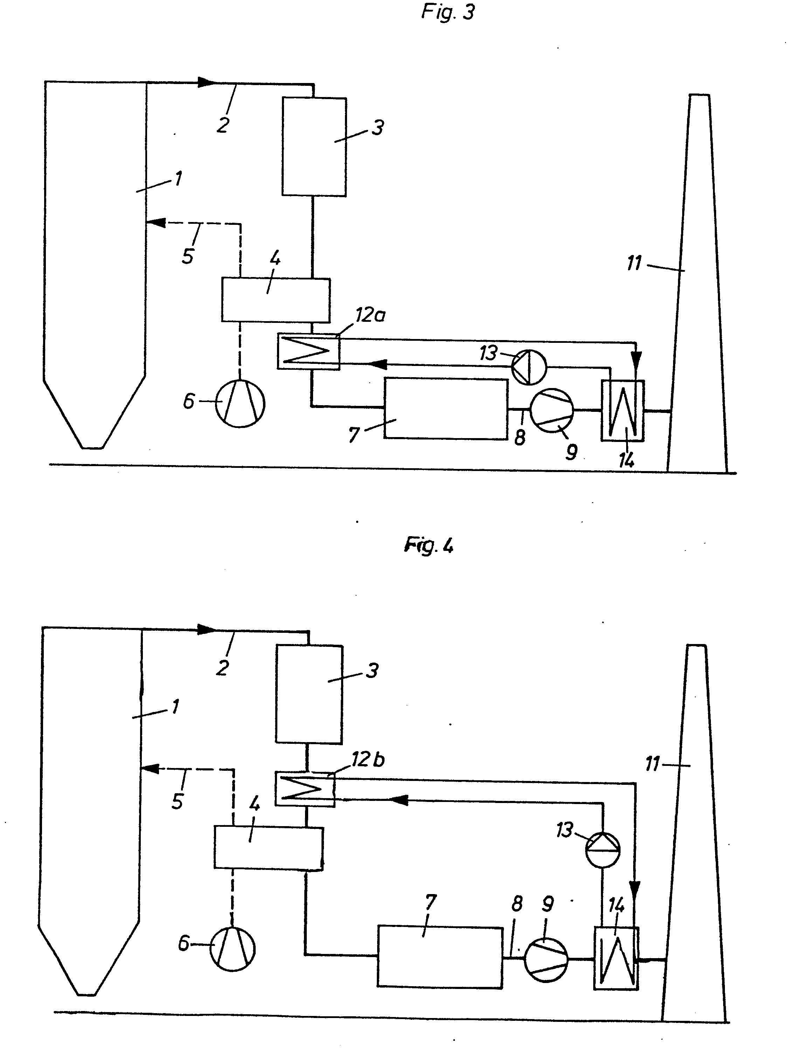

Beim Ausführungsbeispiel nach Fig. 3 ist ein Wärmetauscher zwischen
dem Schornstein 11 und der Rauchgasentschwefelungsanlage 7 vorgesehen, welcher von einem Wärmetauscher 12a beheizt wird, der seinerseits von den aus dem Luftvorwärmer 4 austretenden Rauchgasen
2 beheizt wird.

Die Rauchgastemperatur nach dem Luftvorwärmer 4 liegt bei kohlegefeuerten Kraftwerkblöcken zwischen 125 und 150°C. Nach der
Rauchgasentschwefelungsanlage 7 liegt die Reingastemperatur etwa
zwischen 50 und 65°C und muß je nach behördlich vorgeschriebener Emissionsauflage auf 88 bis 100°C erhöht werden.

Beispielsweise wird ein Kraftwerksblock mit 350MW und einer Dampfleistung von 1018t/h befrachtet. Die Rauchgastemperatur nach dem Luftvorwärmer 4 beträgt beispielsweise 140°C und sinkt nach dem Wärmetauscher 12a auf 112°C ab. Die Reingase 8 treten mit einer Temperatur von 62°C aus der Rauchgasentschwefelungsanlage 7 in den Wärmetauscher 14 ein und verlassen diesen mit einer Temperatur von 88°C. Diese Endtemperatur kann erfindungsgemäß in der Weise konstant gehalten werden, daß die Strömungsgeschwindigkeit des Wärmeträgermediums geregelt wird, u.zw. vorzugsweise über die Drehzahl des Antriebsmotors für die Pumpe 13.

Die Vorteile der erfindungsgemäßen Anordnung gegenüber einem Dreh-Gasvorwärmer sind, daß keine aufwendigen Rauchgasleitungen erforderlich sind, daß kein Übergang von Rohgas in Reingas statt-findet, daß keine Materialprobleme wegen Taupunktsunterschreitungen auftreten, daß ein geringerer Eigenbedarf für das Saugzuggebläse vorhanden ist, und daß praktisch kein Blockwirkungsgradverlust auftritt, da keine zusätzliche Fremdenergie zur Wiederaufheizung erforderlich ist.

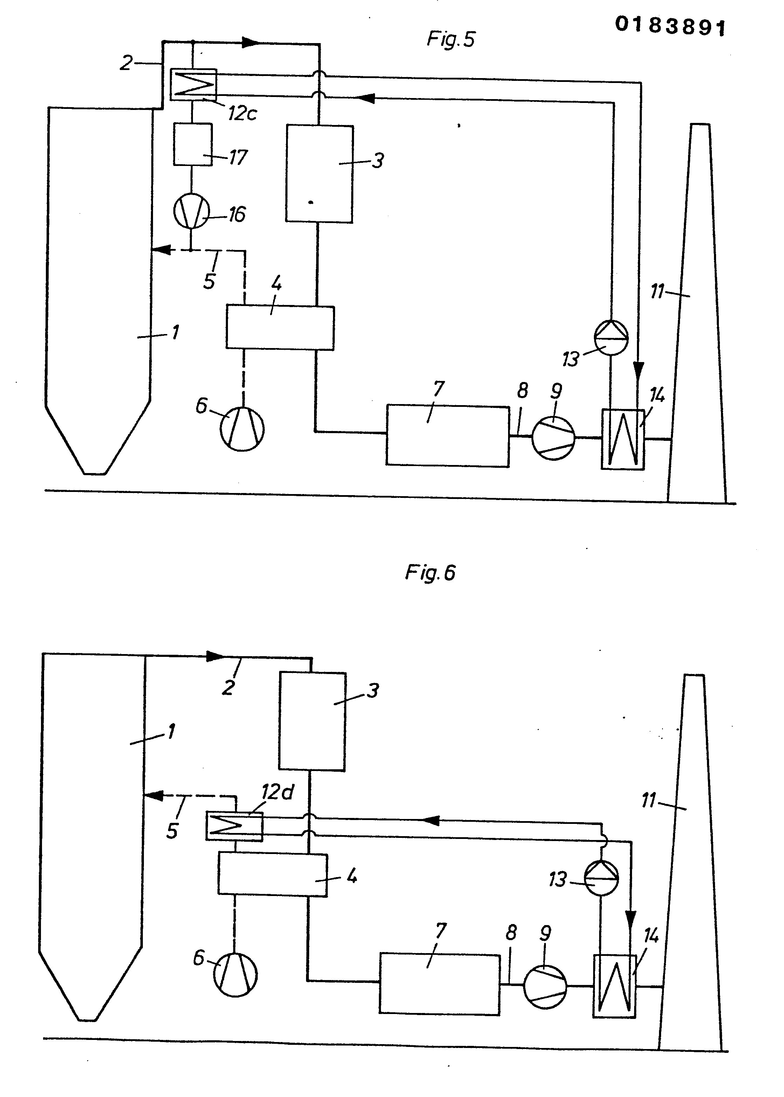

Beim Ausführungsbeispiel nach Fig. 4 ist einWärmetauscher 12b vor dem Luftvorwärmer 4 angeordnet. Im Vergleich zum Beispiel nach Fig. 3 weisen zwar die Rauchgase 2 vor dem Eintritt in den Luftvorwärmer 4 eine geringere Temperatur auf, aber anderseits wird das Wärmeträgermedium im Wärmetauscher 12b auf eine höhere Temperatur erhitzt, sodaß auch die Austrittstemperatur der Reingase 8 aus dem Wärmetauscher 14 höher ist.

Beim Ausführungsbeispiel nach Fig. 5 wird ein Teil der heißen Rauchgase 2 abgezweigt und einem Wärmetauscher 12c zugeführt, von dem aus der Rauchgasanteil über einen Staubabscheider 17 und ein Rezirkulationsgebläse 16 der Heißluft 5 vor dem Eintritt in den Kessel 1 beigemengt wird. Diese Rückführung der Rauchgase

zur Verbrennungsluft ist zur verbrennungstechnischen Minderung des $NO_x$-Gehaltes erwünscht. Die rückgeführte Rauchgasmenge liegt in der Größenordnung von ca 10% der gesamten Rauchgasmenge. Würde man diese Menge aus Rauchgas den Leitungen nach einem Ljungström-Luftvorwärmer entnehmen, so müßten sämtliche anderen Anlagenteile, wie DeNOx-Anlage, Rauchgasleitungen, Luftvorwärmer, E-Staubfilter, für die erhöhte Rauchgasmenge ausgelegt sein, wodurch Probleme bei der Nachrüstung bestehender Kesselanlagen mit einer Rezirkulationsanlage auftreten. Aus diesem Grund ist es vorteilhaft, die Entnahme der über das Rezirkulationsgebläse rückgeführten Rauchgase unmittelbar beim Austritt aus dem Kessel, d.h. nach dem sogenannten Economizer vorzu-sehen. Die Rauchgastemperaturen nach dem Economizer liegen jedoch bei herkömmlichen Anlagen bei ca. 400°C. Diese hohe Temperatur und der Staubanteil bei kohlebeheizten Anlagen bringen jedoch Schwierigkeiten für das Rezirkulationsgebläse. Die erfindungsgemäße Anordnung nach Fig. 5 erbringt den Vorteil, daß die heißen Rauchgase durch den Wärmetauscher 12c zuerst auf Temperaturen unter 200°C abgekühlt und anschließend im Staubabscheider 17 gereinigt werden, bevor sie zum Rezirkulationsgebläse 16 gelangen.

Betrachtet macn beispielsweise einen Kraftwerksblock mit 405MW Leistung bei einer Dampfleistung von 1135/h, so ergibt sich bei einer Rauchgasmenge von 326Nm³/s nach dem Economizer eine Rauchgastemperatur von 390°C. Die über den Wärmetauscher 12 geführte Rauchgas-Rezirkulationsmenge beträgt 33,1Nm³/s, wobei sich die Rauchgase von 390°C auf 140°C abkühlen. Diese Rauchgase können dann problemlos über den Staubabscheider 17 und das Rezirkulationsgebläse 16 in den Brenner des Kessels 1 eingeblasen werden. Die Rauchgasentschwefelungsanlage 7 arbeitet beispielsweise auf dem Sprühabsorptionsverfahren, wobei die Rauchgastemperatur auf 62°C abgesenkt wird. Über den Wärmetauscher 14 wird dann die Rauchgastemperatur auf 88°C erhöht.

Beim Ausführungsbeispiel nach Fig. 6 ist ein Wärmetauscher 12d in der Heißluftleitung zwischen dem Luftvorwärmer 4 und dem Kessel 1 vorgesehen. Diese Anordnung hat den Vorteil, daß der Aufwand für einen Ljungström-Luftvorwärmer und für die Heizbleche geringer ist, da die Baugröße kleiner wird.

Bei sämtlichen Ausführungsbeispielen nach Fig. 3 bis 6 kann der Antriebsmotor für die Pumpe 13 drehzahlgeregelt sein, um die Austrittstemperatur der wiedererhitzten Reingase aus dem ersten Wärmetauscher 14 auf einem konstanten Wert zu halten.

Des weiteren ist es erfindungsgemäß möglich, daß die Vorrichtung gemäß der Erfindung wahlweise mit den Vorrichtungen gemäß der AT-PS        (A 3462/83) oder der AT-PS        (A 3821/83) einzeln oder in Kombination verwendet werden.

0183891

Patentansprüche

1. Vorrichtung zur Wiederaufheizung von Rauchgasen, die aus einer, einem Kesselsystem nachgeschalteten Rauchgasbehandlungsanlage austreten, mittels eines ersten Wärmetauschers, der nach der Rauchgasnachbehandlungsanlage angeordnet und durch Wärme der heißen Rauchgase und/oder der dem Kesselsystem zugeführten Heißluft und/oder gegebenenfalls zusätzlicher Fremdwärme beheizt ist, dadurch gekennzeichnet, daß der Primärkreislauf des ersten Wärmetauschers (14) wahlweise an den Sekundärkreislauf eines zweiten Wärmetauschers (12a) angeschlossen ist, welcher beim Austritt der Rauchgase aus dem Luftvorwärmer (4) des Kesselsystems angeordnet ist, oder an den Sekundärkreislauf eines dritten Wärmetauschers (12b) angeschlossen ist, welcher beim Eintritt der Rauchgase in den Luftvorwärmer (4) des Kesselsystems angeordnet ist,oder an den Sekundärkreislauf eines vierten Wärmetauschers (12c) angeschlossen ist, welcher zwischen dem Eintritt der Rauchgase in den Luftvorwärmer (4) des Kesselsystems und dem Austritt der Heißluft aus dem Luftvorwärmer (4) angeordnet ist, wobei ein Gebläse (16) und ein Staubabscheider (17) in Serie liegend im Primärkreislauf des vierten Wärmetauschers (12d) angeordnet sind, oder an den Sekundärkreislauf eines fünften Wärmetauschers (12d) angeschlossen ist, welcher beim Austritt der Heißluft aus dem Luftvorwärmer (4) des Kesselsystems angeordnet ist (Fig. 3 bis 6).

2. Vorrichtung nach Anspruch 1, dadurch gekennzeichnet, daß für die Wiederaufheizung die zweiten bis fünften Wärmetauscher (12a, 12b,12c,12d) in Kombination untereinander zu zweit, zu dritt oder zu viert in Serien- und/oder Parallelschaltung angeordnet sind.

3. Vorrichtung nach den Ansprüchen 1 oder 2, dadurch gekennzeichnet, daß in an sich bekannter Weise eine Pumpe (13) für das Wärmeträgermedium im Primärkreislauf des ersten Wärmetauschers (14) angeordnet ist.

4. Vorrichtung nach Anspruch 3, dadurch gekennzeichnet, daß die Drehzahl des Antriebsmotors für die Pumpe (13) regelbar ist, um die Austrittstemperatur der wiedererhitzten Reingase (8) aus dem ersten Wärmetauscher (14) konstant halten.

*Fig. 1*     0183891

*Fig. 2*

0183891

Fig. 3

Fig. 4

Fig. 5

0183891

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 206 034  (A. GLASYRIN) <br> * Seite 19, Zeile 28 - Seite 30, Zeile 22; Abbildung 1 * <br> --- | 1,3 | B 01 D  53/34 <br> F 23 J  15/00 |
| E | EP-A-0 148 741  (H. RABITSCH) <br> * Seite  9,  Zeile 9 - Seite 11, Zeile 32; Abbildng 1 * <br> --- | 1-3 | |
| A | DE-A-2 935 762  (R. WIESER) <br> * Seite  6,  Zeile 25 - Seite 7, Zeile 5 * <br><br> ----- | 4 | |

RECHERCHIERTE SACHGEBIETE (Int. Cl.4)

B 01 D
C 10 K
F 23 J
F 23 L

Der vorliegende Recherchenbericht wurde für alle Patentansprüche erstellt

| Recherchenort <br> DEN HAAG | Abschlußdatum der Recherche <br> 26-07-1985 | Prüfer <br> PYFFEROEN K. |
|---|---|---|